Europäisches Patentamt

European Patent Office

Office européen des brevets

(11) Numéro de publication: **0 384 810**
**A1**

## DEMANDE DE BREVET EUROPEEN

(21) Numéro de dépôt: 90400417.3

(22) Date de dépôt: 15.02.90

(51) Int. Cl.5: **B29C 33/38, B29C 35/12**

(30) Priorité: 20.02.89 FR 8902164

(43) Date de publication de la demande:
29.08.90 Bulletin 90/35

(84) Etats contractants désignés:
BE DE ES GB IT LU NL

(71) Demandeur: ANVER
2, rue Suchet
F-94701 Maisons-Alfort Cédex(FR)

(72) Inventeur: Oriez, Robert
75, Avenue Ronsard
F-41100 Vendome(FR)
Inventeur: Gras, Elie
150 Chemin de la Carandière
F-69730 Genay(FR)

(74) Mandataire: Orès, Bernard et al
Cabinet ORES 6, Avenue de Messine
F-75008 Paris(FR)

(54) Moule pour moulage haute fréquence.

(57) Moule propre à être utilisé dans les techniques de moulage haute fréquence de matières plastiques.

Il est réalisé à partir d'un matériau du type pulvérulent et/ou granulaire, ne présentant pas de perte diélectrique et par conséquent perméable à un champ électrique haute fréquence, les particules constitutives du matériau étant réunies entre elles par un liant à base d'une résine présentant une bonne tenue à température élevée, de l'ordre de 200 à 250° C, comme une résine du type polyépoxyde ou formophénolique.

Application : Moulage de matières thermoplastiques et thermodurcissables.

EP 0 384 810 A1

## MOULE POUR MOULAGE HAUTE FREQUENCE

L'invention a pour objet un moule propre à être utilisé dans les techniques de moulage haute fréquence.

Des moules propres à être utilisés dans les techniques de moulage haute fréquence sont connus par exemple par FR-A-2 190 582 ou FR-2 397 281 ou FR-2 402 526, de même que sont connus des moules en élastomères silicones pour la mise en oeuvre des matières thermoplastiques à pertes diélectriques élevées, comme les chlorures de polyvinyle, et cela en raison de leur perméabilité aux champs électriques haute fréquence utilisés dans ces techniques et qui trouvent application par exemple, dans l'industrie de la maroquinerie ou de la chaussure, mais aussi dans l'industrie automobile de même que dans de nombreuses autres. Bien que l'utilisation de tels moules en élastomères silicones soit ancienne dans la technique de transformation des matières thermoplastiques, ils présentent néanmoins un inconvénient important lié au fait qu'ils sont micro-poreux, en raison de la nature même du matériau qui les constitue comme d'ailleurs les moules connus par FR-A-2 457 753. En outre, leur utilisation pour le moulage de matières thermodurcissables est pratiquement interdite en raison de leur très courte durée de vie lorsqu'ils servent à la transformation de telles matières.

Etant donné, par ailleurs, la relative souplesse des élastomères silicones, les moules fabriqués en de tels matériaux présentent une certaine imprécision de leurs cotes, d'une part et, d'autre part, des variations de dimensions dûes aux contraintes mécaniques qu'ils ne peuvent encaisser.

Si l'on souhaite cependant tirer parti des avantages que présentent les techniques de moulage haute fréquence, à la fois pour des matériaux thermoplastiques et pour des matériaux thermodurcissables, tout en s'affranchissant des inconvénients liés aux moules connus, le problème se pose alors de fournir un dispositif permettant de mouler les matières plastiques de l'un et l'autre types, dont la durée de vie soit suffisante pour permettre une exploitation rentable, et qui conduise à des produits de géométrie aussi constante et précise que celle obtenue dans les techniques faisant appel à des moules métalliques.

Le problème qui est à la base de la présente Demande est résolu dans un moule réalisé à partir d'une résine et de particules de matière, par le fait que lesdites particules sont en un matériau du type pulvérulent et/ou granulaire, ne présentant pas de perte diélectrique et par conséquent perméable à un champ électrique haute fréquence et par le fait que la résine liant les particules constitutives pour les réunir entre elle présente une bonne tenue à température élevée, de l'ordre de 200 à 250°C, et est une résine du type polyépoxyde ou formophénolique.

Selon une autre caractéristique de l'invention, le rapport de la quantité de particules à la quantité de liant est choisi pour conduire à une élévation de température du liant, -sous l'action du courant HF qui engendre ledit champ électrique-, la mieux appropriée à la réalisation des caractéristiques de moulage souhaitées.

Pour la fabrication d'un moule selon l'invention, on fabrique d'abord un maître-modèle rigide, dont l'état de surface garantit l'étanchéité et dont le matériau est choisi pour résister aux produits mis en oeuvre, en particulier aux solvants du liant à base de résine, puis on procède à une opération de moulage du mélange de résine formant liant et des charges ; après vieillissement contrôlé pour tenir compte des phénomènes de retrait on obtient ainsi, par moulage, le moule selon l'invention, quelque peu comparable à un moule métallique quant à ses propriétés, mais qui, contrairement à de tels moules métalliques, est perméable au champ HF.

Parmi les matériaux pulvérulents et/ou granulaires appropriés pour la réglisation de l'invention, on peut citer le sulfate de baryum, l'hydrate d'aluminium, ... etc.

Selon une autre caractéristique de l'invention, le moule est caractérisé en ce qu'il est réalisé à partir d'un matériau ayant la composition suivante, en parties en poids:

| - résine polyépoxydique | 100, |
| - sulfate de baryum | 30-40, |
| - hydrate d'alumine | 30-45 |
| - anhydride phthalique | 9-12. |

L'invention sera bien comprise par la description qui suit d'exemples de réalisations préférés.

Exemple 1.

   -    On prépare un mélange de :
- 100 parties en poids de résine polyépoxydique
- 35 parties en poids de sulfate de baryum,
- 35 parties en poids d'hydrate d'alumine,
- 10 parties en poids d'anhydride phthalique.

    Après incorporation des charges à la résine, l'ensemble est coulé sur un maître-modèle en silicone ou un matériau analogue préalablement recouvert d'un agent démoulant et l'on procède à la polymérisation du mélange par étuvage.

    Après vieillisement conduit de manière à durcir le moulage obtenu on sépare le maître-modèle dudit moulage, lequel est propre à être utilisé dans une installation de moulage haute fréquence, par exemple comme décrit dans FR-A-2 322 707 au nom de SIFSA, sans que cette indication ait quelque caractère limitatif que ce soit étant donné, notamment, que des matières autres que des matières thermoplastiques peuvent être mises en oeuvre à l'aide de ce moule, par exemple des matières thermodurcissables comme des résines polyester, des polyuréthannes, des résines phénoliques, ... etc.

Exemple 2.

    On procède comme dans l'exemple 1, mais à partir du mélange suivant en parties en poids :

| - résine phénolique | 100, |
| - sulfate de baryum | 40, |
| - hydrate d'aluminium | 30, |
| - anhydride phthalique | 12 |

Exemple 3.

    On procède comme dans les exemples 1 et 2 ci-dessus, mais en utilisant un mélange ayant la composition suivante en parties en poids:

| - résine polyépoxydique | 100, |
| - sulfate de baryum | 30, |
| - hydrate d'alumine | 45 |
| - anhydride phthalique | 9. |

**Revendications**

    1. Moule propre à être utilisé dans les techniques de moulage haute fréquence réalisé à partir d'une résine et de particules de matières, caractérisé en ce que ces dernières sont en un matériau du type pulvérulent et/ou granulaire, ne présentant pas de perte diélectrique et par conséquent perméable à un champ électrique haute fréquence et en ce que la résine liant lesdites particules constitutives pour les réunir entre elles présente une bonne tenue à température élevée, de l'ordre de 200 à 250°C et est du type polyépoxyde ou formophénolique.

    2. Moule selon la revendication 1, caractérisé en ce que lesdites particules sont de préférence constituées par du sulfate de baryum et de l'hydrate d'alumine.

    3. Moule selon l'une des revendications précédentes, caractérisé en ce qu'il est réalisé à partir d'un matériau ayant la composition suivante, en parties en poids :

| - résine polyépoxydique : | 100 |
|---|---|
| - sulfate de baryum : | 30-40 |
| - hydrate d'alumine : | 30-45 |
| - anhydride phthalique : | 9-12 |

4. Moule selon l'une quelconque des revendications précédentes, caractérisé en ce que le matériau constitutif du moule a la composition suivante, en parties en poids :

| - résine polyépoxydique : | 100 |
|---|---|
| - sulfate de baryum : | 35 |
| - hydrate d'alumine : | 35 |
| - anhydride phthalique : | 10 |

5. Moule selon la revendication 1, caractérisé en ce que le matériau constitutif du moule a la composition suivante, en parties en poids :

| - résine phénolique : | 100 |
|---|---|
| - sulfate de baryum : | 40 |
| - hydrate d'alumine : | 30 |
| - anhydride phthalique : | 12. |

6. Moule selon la revendication 3, caractérisé en ce que le matériau constitutif du moule a la composition suivante, en parties en poids :

| - résine polyépoxydique : | 100 |
|---|---|
| - sulfate de baryum : | 30 |
| - hydrate d'alumine : | 45 |
| - anhydride phthalique : | 9. |

**Office européen des brevets**

**RAPPORT DE RECHERCHE EUROPEENNE**

Numero de la demande

EP 90 40 0417

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | FR-A-2 190 582 (SOCIETE INMOBILIERE ET FINANCIERE SUCHET ALFORT S.I.F.S.A.) * Page 2, lignes 11-15; page 3, lignes 11-18; revendications 1-4; figures * --- | 1-6 | B 29 C 33/38 B 29 C 35/12 |
| A,D | FR-A-2 402 526 (ISOBCK-BARBIER) * Page 2, lignes 6-21; revendication 1 * --- | 1 | |
| A,D | FR-A-2 457 753 (INVENTA AG FÜR FORSCHUNG UND PATENTVERWERTUNG ZURICH) * Page 3, lignes 10-26; page 4, lignes 11-38; page 5, lignes 9-20 * --- | 1 | |
| A,D | FR-A-2 397 281 (S.A.E.I. CELTITE) * Revendications 1-2 * ----- | 1 | |

| | | | DOMAINES TECHNIQUES RECHERCHES (Int. Cl.5) |
|---|---|---|---|
| | | | B 29 C |

**Le présent rapport a été établi pour toutes les revendications**

| Lieu de la recherche | Date d'achèvement de la recherche | Examinateur |
|---|---|---|
| LA HAYE . | 25-05-1990 | MOLTO PINOL F.J. |